# EUROPÄISCHE PATENTANMELDUNG

(11) **EP 4 412 106 A1**
(43) Veröffentlichungstag der Anmeldung: **07.08.2024**
(21) Anmeldenummer: 23154754.8
(22) Anmeldetag: 02.02.2023
(51) Int. Cl.: H04B 7/185

(54) **VERFAHREN ZUM BETREIBEN EINES SELBSTBEWEGLICH MOBILEN RECHENGERÄTS, SELBSTBEWEGLICHES MOBILES RECHENGERÄT, STEUERGERÄT UND NETZWERK**

(71) Anmelder: Siemens Aktiengesellschaft, 80333 München (DE)
(72) Erfinder: Sauer, Markus, 81739 München (DE); Zeiger, Florian, 85635 Höhenkirchen-Siegertsbrunn (DE)
(74) Vertreter: Siemens Patent Attorneys

(57) **Zusammenfassung**

Bei dem Verfahren zum Betreiben eines selbstbeweglich mobilen Rechengeräts wird für das mobile Rechengerät abhängig von einer Bewegungsgröße des mobilen Rechengeräts eine Begrenzung von mindestens einer Rechenressource mindestens einer auf dem mobilen Rechengerät laufenden Applikation vorgenommen.

Das selbstbewegliche mobile Rechengerät ist zur Ausführung eines erfindungsgemäßen Verfahrens eingerichtet und ausgebildet.

Das Steuergerät ist zur Ausführung eines erfindungsgemäßen Verfahrens eingerichtet und ausgebildet.

Das Netzwerk umfasst ein solches selbstbewegliches mobiles Rechengerät und/oder ein solches Steuergerät.

## Beschreibung

Die Erfindung betrifft ein Verfahren zum Betreiben eines selbstbeweglich mobilen Rechengeräts, ein selbstbewegliches mobiles Rechengerät, ein Steuergerät und ein Netzwerk

Gegenwärtig werden die meisten fortschrittlichen Kommunikationssysteme und -funktionen softwarebasiert realisiert und als virtualisierte Funktionen und/oder Anwendungen in Allzweck-Computerumgebungen ausgeführt.

Häufig erforderliche Rechenressourcen für Kommunikationsfunktionen sind heute typischerweise Hochleistungsressourcen, da Kommunikationsfunktionen aufgrund ihrer Beziehung zu den heute geforderten Kommunikationseigenschaften meist eine hohe Rechenleistung erfordern.

Moderne Kommunikationsinfrastruktursysteme in Form von selbstbeweglich mobilen Systemen, wie insbesondere Satelliten, sind daher regelmäßig Hochleistungsrechensysteme mit angeschlossenen Funkverstärkern und Antennen. Die verfügbaren Hochleistungsressourcen werden jedoch nach wie vor auf den Kommunikationsinfrastruktursystemen ineffizient genutzt.

Vor diesem Hintergrund des Standes der Technik ist es daher Aufgabe der Erfindung, ein Verfahren zum Betreiben eines selbstbeweglich mobilen Rechengeräts anzugeben, welches gegenüber herkömmlichen Verfahren zum Betreiben mobiler Rechengeräte verbessert ist. Insbesondere soll mittels des erfindungsgemäßen Verfahrens eine effizientere Nutzung des mobilen Rechengeräts möglich sein. Ferner ist es Aufgabe der Erfindung, ein selbstbewegliches mobiles Rechengerät, ein Steuergerät und ein Netzwerk zu schaffen, mittels welchen das verbesserte Verfahren ausführbar ist.

Diese Aufgabe der Erfindung wird mit einem Verfahren mit den in Anspruch 1 angegebenen Merkmalen sowie mit einem selbstbeweglichen mobilen Rechengerät mit den in Anspruch 11 angegebenen Merkmalen und mit einem Steuergerät mit den in Anspruch 12 angegebenen Merkmalen sowie mit einem Netzwerk mit den in Anspruch 13 angegebenen Merkmalen gelöst. Bevorzugte Weiterbildungen der Erfindung sind in den zugehörigen Unteransprüchen, der nachfolgenden Beschreibung und der Zeichnung angegeben.

Bei dem erfindungsgemäßen Verfahren zum Betreiben eines selbstbeweglich mobilen Rechengeräts wird für das mobile Rechengerät abhängig von einer Bewegungsgröße des mobilen Rechengeräts eine Freigabe von mindestens einer Rechenressource mindestens einer auf dem mobilen Rechengerät laufenden Applikation an, d. h. für, mindestens eine Zweitapplikation vorgenommen.

Herkömmliche selbstbewegliche mobile Rechengeräte mit Rechen- und Kommunikationsressourcen, wie insbesondere Satelliten, bewegen sich häufig über Regionen, etwa Meere, in denen eine bestimmte Anwendungsnutzlast, insbesondere für Kommunikation, nicht mehr von Benutzerinnen und Benutzern für diese Art von Nutzlast verwendet wird. Denn Benutzerinnen und Benutzer befinden sich typischerweise in anderen Regionen, etwa in ländlichen und/oder landwirtschaftlichen Gebieten. Somit werden die Rechenressourcen der mobilen Rechengeräte oftmals nicht vollständig genutzt, was umso nachteiliger ist, als die Nutzung dieser ohnehin vorhandenen und ansonsten ungenutzten Rechenressourcen ohne Zusatzkosten erfolgen kann. Erfindungsgemäß können die ohnehin vorhandenen und regional nicht angeforderten Rechenressourcen hingegen genutzt werden, sodass eine effiziente Nutzung von modernen Kommunikationsinfrastruktursystemen in Form selbstbeweglicher mobiler Rechengeräte möglich ist.

Darüber hinaus sind herkömmliche selbstbewegliche mobile Rechengeräte für eine intensive Nutzung von Rechenressourcen ausgelegt, um in jeder Situation eine hinreichende Verfügbarkeit zu gewährleisten. Wenn also mehrere Anwendungen auf den Systemen betrieben werden, wird herkömmlich das Overprovisioning nicht hinreichend effizient genutzt, da es bislang oft eine strikte Trennung von ortsunabhängigen Rechenressourcen und ortsabhängigen Rechenressourcen, insbesondere Kommunikationsressourcen, gibt. Derzeit findet eine Anpassung in der Orchestrierung, wenn ortsabhängige Rechenressourcen wie Kommunikationsressourcen nicht verwendet werden, nicht statt. Die im Leerlauf befindlichen Rechenressourcen werden also gegenwärtig nicht verwendet. Im Gegensatz dazu können bei dem erfindungsgemäßen Verfahren herkömmlich nicht angeforderte Rechenressourcen, die insbesondere als Kommunikationsressourcen bereitgehalten werden, für andere Aufgaben und Anwendungsfälle genutzt werden, sodass die mobilen Rechengeräte mit einer effizienteren Auslastung ihrer Rechenressourcen betrieben werden können.

Zweckmäßig ist bei dem Verfahren gemäß der Erfindung die Freigabe der mindestens einen Rechenressource der mindestens einen Applikation in einem Nutzungsprofil festgelegt, wobei das Nutzungsprofil abhängig von der Bewegungsgröße gewählt wird. Ein solches Nutzungsprofil kann insbesondere ortsabhängig gewählt werden.

So können etwa an einigen Orten des mobilen Rechengeräts Nutzungsprofile vorgesehen sein, die Applikationen umfassen, die Rechenressourcen für Kommunikationsfunktionen erfordern. An anderen Orten des mobilen Rechengeräts können Applikationen vorgesehen sein, die Kommunikationsfunktionen nicht erfordern und welchen die Rechenressourcen, die somit nicht für Kommunikationsfunktionen vorgesehen sein müssen, nunmehr für mindestens eine Zweitapplikation zur Verfügung stehen.

In einer vorteilhaften Weiterbildung des erfindungsgemäßen Verfahrens erfolgt die Freigabe der mindestens einen Rechenressource als Abschalten und/oder Inaktivieren der mindestens einen Applikation. Grundsätzlich kann auch die Nutzung der Rechenressourcen durch die Applikation reduziert und/oder begrenzt werden.

Bei dem erfindungsgemäßen Verfahren umfasst zweckmäßig die Bewegungsgröße mindestens einen Ort und/oder eine Zeit des mobilen Rechengeräts. Ort und/oder Zeit des mobilen Rechengeräts können regelmäßig einfach zur Bestimmung einer Position entlang einer Trajektorie des mobilen Rechengeräts herangezogen werden.

Unter einer Bewegungsgröße im Sinne der vorliegenden Erfindung kann zum einen ein Ort, d. h. eine Position, des mobilen Rechengeräts zu verstehen sein. So kann sich etwa die Position des mobilen Rechengeräts im Falle eines Satelliten über einem Ozean befinden, wobei in dieser Position des mobilen Rechengeräts Rechenressourcen für Kommunikationsfunktionen nicht angefordert werden. Positionsabhängig sind können folglich Rechenressourcen des mobilen Rechengeräts für andere Rechenaufgaben umgewidmet werden. Unter einer Bewegungsgröße kann im Rahmen der vorliegenden Erfindung auch eine Zeit, d. h. ein Zeitpunkt, des mobilen Rechengeräts zu verstehen sein. Denn mobile Rechengeräte etwa in Form von Satelliten sind regelmäßig abhängig von Zeitpunkt an einer bestimmten Position befindlich, etwa bei einer sich insbesondere periodisch wiederholenden, Bewegung oder bei einer vorbekannten Trajektorie des mobilen Rechengeräts. Insofern kann die Position leicht in einen Zeitpunkt übersetzt werden, sodass die Angabe der Position mit einer Angabe des Zeitpunkts des mobilen Rechengeräts ersetzt werden kann und umgekehrt.

Unter einer Bewegungsgröße im Sinne der vorliegenden Erfindung kann auch ein Tupel von Ort und Geschwindigkeit angesehen werden. So kann abhängig vom Ort und der Geschwindigkeit, etwa im Falle eines mobilen Rechengeräts in Form eines Satelliten, leicht berechnet werden, für welchen zukünftigen Zeitraum keine Rechenressourcen für Kommunikationsfunktionen angefordert werden. Wenn also eine Bewegungsgröße die Geschwindigkeit oder höhere zeitliche Ableitungen des Ortes umfasst, kann der weitere Bewegungsverlauf des mobilen Rechengeräts und folglich zudem der künftige Bedarf an ortsabhängigen Rechenressourcen leicht und zuverlässig bestimmt werden.

In einer vorteilhaften Weiterbildung des erfindungsgemäßen Verfahrens umfasst die mindestens eine Rechenressource eine Rechenleistung und/oder eine Übertragungsrate und/oder eine Übertragungskapazität und/oder eine Speicherkapazität. Insbesondere solche Rechenressourcen können für Kommunikationsfunktionen vorgesehen sein, die regelmäßig von der mindestens einen Bewegungsgröße abhängen. Solche Rechenressourcen lassen sich vorteilhaft für eine Vielzahl weiterer Zweitapplikationen einsetzen.

In einer bevorzugten Weiterbildung des erfindungsgemäßen Verfahrens ist das selbstbeweglich mobile Rechengerät mittels eines Satelliten oder einer Drohne oder eines Flugzeugs oder eines Seefahrzeugs oder Landfahrzeugs gebildet. Solche mobilen Rechengeräte sind insbesondere derart selbstbeweglich, dass sie während ihres Betriebs nicht eines weiteren Beförderungsmittels bedürfen, welches mit dem mobilen Rechengerät keine dauerhaft einstückige Einheit bildet.

Vorzugsweise ist bei dem Verfahren gemäß der Erfindung die mindestens eine Rechenressource eine Rechenressource mindestens einer Kommunikationsfunktion. Typischerweise bilden solche Rechenressourcen inzwischen Hochleistungsrechenressourcen, welche dann, wenn sie für Zweitapplikationen freigegeben sind, für diese Zweitapplikationen einen erheblichen Ressourcenvorteil bilden können.

In einer bevorzugten Weiterbildung des erfindungsgemäßen Verfahrens wird dieses mittels eines Moduls des mobilen Rechengeräts ausgeführt. So kann das Modul des mobilen Rechengeräts die Freigabe der Rechenressourcen selbstständig ohne Kommunikation mit weiteren Gerätschaften vornehmen.

Alternativ oder zusätzlich und ebenfalls bevorzugt wird das erfindungsgemäße Verfahren mittels einer Steuerung ausgeführt, welche das mobile Rechengerät steuert. In einer Weiterbildung der Erfindung bildet die Steuerung eine von dem mobilen Rechengerät separate und mit dem mobilen Rechengerät in Kommunikationsverbindung stehende Vorrichtung.

Das erfindungsgemäße selbstbeweglich mobile Rechengerät ist zur Ausführung eines erfindungsgemäßen Verfahrens eingerichtet und ausgebildet, insbesondere mittels eines Moduls des mobilen Rechengeräts wie vorhergehend bereits zu einer Weiterbildung des erfindungsgemäßen Verfahrens ausgeführt.

Das erfindungsgemäße Steuergerät ist zur Ausführung eines erfindungsgemäßen Verfahrens eingerichtet und ausgebildet.

Das erfindungsgemäße Netzwerk umfasst ein erfindungsgemäßes selbstbeweglich mobiles Rechengerät wie vorhergehend beschrieben und/oder ein erfindungsgemäßes Steuergerät wie vorhergehend beschrieben.

Nachfolgend wird die Erfindung anhand in der Zeichnung dargestellter Ausführungsbeispiele näher erläutert.

Es zeigen:
- Fig. 1: ein erfindungsgemäß selbstbeweglich mobiles Rechengerät in Gestalt eines Satelliten eines industriellen Netzwerks schematisch in einer Prinzipskizze sowie

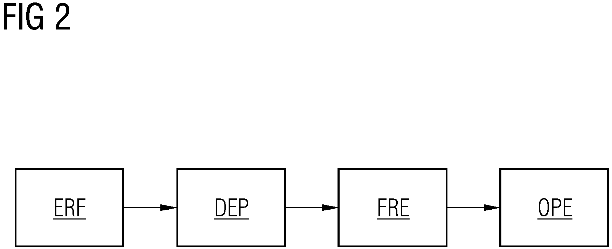

- Fig. 2: das erfindungsgemäße Verfahren zum Betreiben eines selbstbeweglich mobilen Rechengeräts schematisch in einer Prinzipskizze.

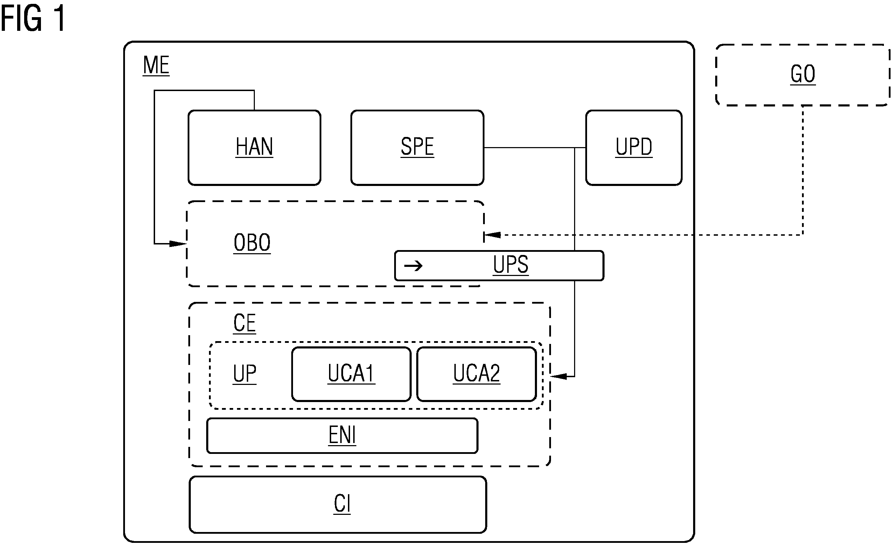

Das in Fig. 1 dargestellte selbstbeweglich mobile Rechengerät ME ist ein Satellit. In weiteren, nicht eigens dargestellten Ausführungsbeispielen, welche im Übrigen dem dargestellten Ausführungsbeispiel entsprechen, kann das selbstbeweglich mobile Rechengerät ME auch ein anderes selbstbeweglich mobiles Rechengerät ME sein, etwa ein autonomes Transportfahrzeug, ein Schiff oder ein vorzugsweise autonomes Flugzeug.

Das mobile Rechengerät ME weist einen globalen Orchestrator GO auf. Der globale Orchestrator GO ist verantwortlich für die Verwaltung zahlreicher mobiler Rechengeräte ME in Gestalt von Satelliten. Es versteht sich, dass vorliegend selbstbeweglich mobile Einheiten, die Rechenressourcen aufweisen, als Rechengeräte bezeichnet werden. Soweit Rechengeräte einstückig Teil einer selbstbeweglich mobilen Entität sind, kann gemäß der Erfindung die gesamte einstückige Entität als mobiles Rechengerät ME bezeichnet werden.

Der globale Orchestrator GO stellt zudem sicher, dass alle erforderlichen Artefakte für Nutzlastumgebungen und Nutzungsprofile UP im Voraus in die Datenbanken UPD der mobilen Rechengeräte ME hochgeladen werden.

Der Bord-Orchestrator OBO überwacht die Ausführung von Softwarekomponenten an Bord der mobilen Rechengeräte ME und verwaltet die Planung der Nutzungsprofilen UP. Zudem übernimmt der Bord-Orchestrator OBO die Überwachung des Systemstatus inkl. der Position des mobilen Rechengeräts ME. Basierend auf diesen Überwachungs- und Systemdaten wird ein (Re-)Deployment von Payload-Umgebungen gesteuert.

Ein Navigationsmodul HAN des mobilen Rechengeräts ME steuert das mobile Rechengerät ME, hier den Satelliten, und bietet Zugriff auf Telemetriedaten und die Position des mobilen Rechengeräts ME.

Das mobile Rechengerät ME weist zudem einen Speicher SPE für Nutzlastumgebungen auf. Eine Nutzlastumgebung enthält alle Softwarekomponenten, die für den ordnungsgemäßen Betrieb einer Nutzlast und/oder eines Anwendungsfalls erforderlich sind. Außerdem sind alle internen und externen Vernetzungen der Softwarekomponenten definiert und Teil der Nutzlastumgebung.

Das mobile Rechengerät ME weist zudem eine Nutzungsprofildatenbank UPD auf. Die Nutzungsprofildatenbank UPD enthält alle Nutzungsprofile UP, die für ein mobiles Rechengerät ME relevant sind. Diese Nutzungsprofildatenbank UPD kann im Laufe der Zeit mit neuen/zusätzlichen Nutzungsprofilen UP aktualisiert werden. Ein Nutzungsprofil UP enthält eine Beschreibung und eine Konfigurationseinstellung von Nutzlastumgebungen, die bei bestimmten Bewegungsgrößen des mobilen Rechengeräts ME aktiv sein sollen, wie vorliegend beispielsweise bei einer bestimmten Position des mobilen Rechengeräts ME und/oder zu einem bestimmten aktuellen Zeitpunkt. Fliegt beispielsweise das mobile Rechengerät ME über Land über ein besiedeltes Gebiet, so bietet er dort Kommunikationsfunktionen an. Sobald das mobile Rechengerät ME aber einen Ozean erreicht, wird er neu konfiguriert und verwendet seine Rechenressourcen nur für sonstige Rechenaufgaben, da niemand die Kommunikationsfunktion über dem Ozean nutzt. Das Nutzungsprofil UP kann sowohl ein statisches Nutzungsprofil UP sein als auch ein Nutzungsprofil UP sein, das im Laufe der Zeit optimiert wird, indem Nutzungshistorien integriert und Nutzungsvorhersagemodelle mittels Machine Learnings erlernt werden, um sich an eine sich ändernde Systemnutzung anzupassen. Nutzungsprofile UP enthalten Softwareanwendungen UCA1, UCA2, sowie Kommunikationsfunktionen, z.B. in Form von virtualisierten Netzwerkfunktionen.

Ein Nutzungsprofilzeitplan UPS enthält eine Reihe von Nutzungsprofilen UP der Nutzungsprofildatenbank UPD, die nach dem Auftreten bestimmter Bewegungsgrößen, d. h. beispielsweise nach dem Erreichen einer bestimmten Position des mobilen Rechengeräts und/oder einer bestimmten Zeit aktiviert werden. Dabei werden zusätzlich nicht im Einzelnen dargestellte anwendungsspezifische und/oder situations- und/oder ortsspezifische Anforderungen berücksichtigt.

Das mobile Rechengerät ME weist zudem eine Rechenumgebung CE auf. Die Rechenumgebung CE bildet eine Recheninfrastruktur an Bord des mobilen Rechengeräts, das in der Lage ist, eine oder mehrere Nutzlastumgebungen zu hosten.

Das aktuell verwendete Nutzungsprofil UP enthält im dargestellten Ausführungsbeispiel einen ersten Anwendungsfall UCA1 und einen zweiten, vom ersten Anwendungsfall UCA1 verschiedenen, Anwendungsfall UCA2. Die beiden Anwendungsfälle UCA1, UCA2 werden durch ihre anwendungsfallspezifischen Nutzlastumgebungen ermöglicht.

Das mobile Rechengerät weist zudem eine Edge-Netzwerkschnittstelle ENI auf. Die Edge-Netzwerkschnittstelle ENI ist ein, vorliegend virtuelles, Netzwerkelement, das Softwaremodule innerhalb einer Nutzlastumgebung verbindet, Konnektivität zwischen verschiedenen Nutzlastumgebungen herstellt und bei Bedarf die Konnektivität zu externen Kommunikationssystemen ermöglicht. Es ist die Hauptschnittstelle zur Kommunikationsinfrastruktur CI.

Die Kommunikationsinfrastruktur CI stellt verschiedene Kommunikationstechnologien bereit: Im dargestellten Ausführungsbeispiel werden auf den mobilen Rechengeräten ME in Gestalt von Satelliten Funkverbindungen und/oder optische Verbindungen angeboten. Softwarekomponenten haben über die Edge-Netzwerkschnittstelle ENI Zugriff auf die Kommunikationsinfrastruktur CI. Die Kommunikationsinfrastruktur CI umfasst Technologien für die Kommunikation zwischen den mobilen Rechengeräten ME, für die Backbone-Kommunikation des nichtterrestrischen Netzwerks und für die Konnektivität zwischen Satelliten und terrestrischen Terminals.

Mittels des erfindungsgemäßen mobilen Rechengeräts ME wird das erfindungsgemäße Verfahren wie folgt ausgeführt:
Das mobile Rechengerät ME bewegt sich von dem Navigationsgerät HAN gesteuert entlang einer Trajektorie. Das Navigationsmodul HAN ermittelt in einem Erfassungsschritt ERF die aktuelle Position des mobilen Rechengeräts ME.

Das Navigationsmodul HAN übermittelt die Position des mobilen Rechengeräts ME an den Bord-Orchestrator OBO.

Der Bord-Orchestrator OBO zieht die Position des Rechengeräts ME in einem weiteren Verfahrensschritt DEP heran, um aus einer Nutzungsprofildatenbank UPD gemäß einem Nutzungsprofilzeitplan UPS ein Nutzungsprofil UP heranzuziehen, welches die Konfigurationseinstellung von Nutzlastumgebungen festlegt.

Gemäß dem herangezogenen Nutzungsprofil UP werden die Rechenressourcen des mobilen Rechengeräts von einem Anwendungsfall UCA1 in einem weiteren Freigabeschritt FRE freigegeben und in der Zeichnung nicht dargestellten, weiteren, Anwendungsfällen zur Verfügung gestellt.

Mit diesen neu verteilten Rechenressourcen wird das mobile Rechengerät ME in einem nachfolgenden Verfahrensschritt OPE betrieben.

Grundsätzlich kann das erfindungsgemäße Verfahren in weiteren, nicht eigens dargestellten Ausführungsbeispielen, auch mittels einer Steuerung anstelle des Navigationsmoduls HAN und des Bord-Orchestrators OPO durchgeführt werden.

Eine solche Steuerung bildet eine erfindungsgemäße Steuerung.

Das zuvor beschriebene erfindungsgemäße mobile Rechengerät und/oder die zuvor beschriebene erfindungsgemäße Steuerung sind Teil eines nicht im Einzelnen in der Zeichnung dargestellten erfindungsgemäßen industriellen Netzwerks.

## Patentansprüche

1. Verfahren zum Betreiben (OPE) eines selbstbeweglich mobilen Rechengeräts (ME), bei welchem für das mobile Rechengerät (ME) abhängig von einer Bewegungsgröße des mobilen Rechengeräts (ME) eine Freigabe (FRE) von mindestens einer Rechenressource mindestens einer auf dem mobilen Rechengerät (ME) laufenden Applikation (UCA1) an mindestens eine Zweitapplikation vorgenommen wird.

2. Verfahren nach Anspruch 1, bei welchem die Freigabe (FRE) der mindestens einen Rechenressource der mindestens einen Applikation (UCA1) in einem Nutzungsprofil (UP) festgelegt ist, wobei das Nutzungsprofil (UP) abhängig von der Bewegungsgröße gewählt wird.

3. Verfahren nach einem der vorhergehenden Ansprüche, bei welchem die Freigabe (FRE) der mindestens einen Rechenressource mittels Abschaltens und/oder Inaktivierens der mindestens einen Applikation (UCA1) erfolgt.

4. Verfahren nach einem der vorhergehenden Ansprüche, bei welchem die Bewegungsgröße mindestens einen Ort und/oder eine Zeit des mobilen Rechengeräts (ME) umfasst.

5. Verfahren nach einem der vorhergehenden Ansprüche, bei welchem die mindestens eine Rechenressource eine Rechenleistung und/oder eine Übertragungsrate und/oder eine Übertragungskapazität und/oder eine Speicherkapazität umfasst.

6. Verfahren nach einem der vorhergehenden Ansprüche, bei welchem das mobile Rechengerät (ME) mittels eines Satelliten oder einer Drohne oder eines Flugzeugs oder eines Seefahrzeugs oder Landfahrzeugs gebildet ist.

7. Verfahren nach einem der vorhergehenden Ansprüche, bei welchem die mindestens eine Rechenressource eine Rechenressource mindestens einer Kommunikationsfunktion ist.

8. Verfahren nach einem der vorhergehenden Ansprüche, welches mittels mindestens eines Moduls (HAN, OPO) des mobilen Rechengeräts (ME) ausgeführt wird.

9. Verfahren nach einem der vorhergehenden Ansprüche, welches mittels einer Steuerung ausgeführt wird, welche das mobile Rechengerät (ME) steuert.

10. Selbstbeweglich mobiles Rechengerät, welches zur Ausführung eines Verfahrens nach Anspruch 8 eingerichtet und ausgebildet ist.

11. Steuergerät, welches zur Ausführung eines Verfahrens nach Anspruch 9 eingerichtet und ausgebildet ist.

12. Netzwerk, umfassend ein selbstbeweglich mobiles Rechengerät (ME) nach Anspruch 10 und/oder ein Steuergerät nach Anspruch 11.
